# EUROPÄISCHE PATENTSCHRIFT

(11) **EP 1 174 467 B1**
(45) Veröffentlichungstag und Bekanntmachung des Hinweises auf die Patenterteilung: **15.09.2004**
(21) Anmeldenummer: 01116509.9
(22) Anmeldetag: 07.07.2001
(51) Int. Cl.: C08L 63/00, C09D 163/00, C08L 83/04, C09D 183/04, C10M 159/22, C07C 65/105, C08G 59/32, C08G 77/14, C08L 61/06

(54) **Hitzestabile, korrosionsinhibierende Polyorganosiloxanharze**
Heat stable, corrosion inhibiting polyorganosiloxane resins
Résines de polyorganosiloxane thermostables et inhibitrices de corrosion

(30) Priorität: 22.07.2000 DE 10035755
(43) Veröffentlichungstag der Anmeldung: 23.01.2002
(73) Patentinhaber: Goldschmidt AG, 45127 Essen (DE)
(72) Erfinder: Reusmann, Gerhard, Dr., 45131 Essen (DE)

(56) Entgegenhaltungen:
- US-A- 5 516 858

## Beschreibung

Die vorliegende Erfindung beschreibt ein Silicon enthaltendes Epoxidharz, deren Herstellung und die Verwendung in korrosionsinhibierenden, hitzestabilen Beschichtungen.

T-Gruppen-haltige vernetzte Siliconharze sind hoch-hitzestabil und haben ausgezeichnete Filmbildungs-Eigenschaften. Aus diesen Gründen werden sie beispielsweise als Elektroisoliermaterialien, als hitzestabile Beschichtungen und Farben, als Schutzlacke, als Performance-Verbesserer in organischen Bindemitteln und als Copolymere in Verbindung mit organischen Monomeren oder mit organischen Harzen verwendet. Als Silicon-Kombinationsharze aus dieser Gruppe sind siliconhaltige Epoxidharze in einer Vielzahl von Publikationen und Patenten beschrieben. Dabei werden eine Vielzahl von Syntheserouten für die Herstellung beschritten.

Für die Herstellung von Epoxidgruppen enthaltenden Siliconharzen werden in einer Vielzahl von Patenten eine Cohydrolyse von Epoxidgruppen enthaltenden Trialkoxysilanen wie beispielsweise 3-Glycidoxypropyltrialkoxysilan mit Organotrialkoxysilanen und/oder Diorganodialkoxysilanen und/oder Triorganomonoalkoxysilanen beschrieben. Ein Überblick gibt US 5 516 858 A.

Nachteil dieser Syntheseroute ist, dass nur maximal eine Epoxidgruppe pro Si angebunden wird; die resultierenden Harze besitzen keine Carbinol (COH)-Funktionalität, die zur Vernetzung mit SiOR befähigt ist. Entsprechend müssen hitzelabile Vernetzer zur Vernetzungsreaktion zugegeben werden. Die hitzelabilen Vernetzer reduzieren entscheidend die Hitzestabilität der resultierenden Korrosionsschutz-Beschichtung.

In US 4 250 074 A wird die Bildung eines Interpenetrating Polymer Network (IPN) aus Epoxy-Polyamin und Polysiloxan beschrieben. Durch die Unverträglichkeit von Epoxid- und Siliconharz kann nur eine geringe Menge Siliconharz (ca. 2-4 % der Formulierung) eingesetzt werden. Entsprechende Formulierungen zeigen keine Hitzestabilität bei Temperaturen oberhalb von 200 °C.

Epoxidsilan enthaltende Formulierungen, in denen diese als Haftvermittler fungieren, sind beispielsweise in EP 0 556 023 A1 beschrieben. Die geringen Einsatzkonzentrationen der Epoxidsilane erlauben dabei nicht die Formulierung hitzestabiler Systeme.

Andere Patente beschreiben einfache Mischungen aus Siliconen und Epoxiden zur Herstellung von Beschichtungen:
Die japanischen Patente JP 04176368 A2 und JP 04135674 A2 beschreiben Mischungen von verschiedenen Epoxiden, OH-funktionellen Polydimethylsiloxanen und Titanaten. Durch die fehlende Anbindung von Silicon und Epoxid sowie die Verwendung der nur kettenverlängernden linearen Polydimethylsiloxane werden keine hitzestabilen Beschichtungen erhalten. Die Beschichtungen weisen nur gute Kochwasserbeständigkeit bei hoher Flexibilität und Bewitterungsstabilität auf.

Das japanische Patent JP 61258871 A2 beschreibt eine Mischung aus Siliconharz und Epoxidharz. Durch Formulierung mit verschiedenen anorganischen Pigmenten werden hitzestabile Formulierungen erhalten. Da das Epoxidharz nicht durch chemische Reaktion mit Siliconen stabilisiert ist, sind in den beschriebenen Formulierungen sehr hohe Siliconanteile zur Erzielung der Temperaturstabilität notwendig; der Epoxidanteil an der Formulierung liegt entsprechend nur bei etwa 10 Gew.-%. Entsprechend hochpreisig sind die Formulierungen; der große Siliconanteil verschlechtert durch die erhöhte WasserdampfDurchlässigkeit die Korrosionsschutzwirkung.

Mischungen von Epoxidharzen mit linearen Polydimethylsiloxanen, wie im japanischem Patent JP 2132165 A2 beschrieben, erreichen wegen der fehlenden chemischen Anbindung nur korrosionsschützende, aber keine hitzestabilen Eigenschaften.

Die Härtung von Epoxiden durch Organosiliconhärter wird von Vasiléva et.al. in "Lakokras. Mater. Ikh Primen. (1967), 4, S.18-20" beschrieben. Der hohe Amingehalt der Formulierung und die mangelnde Anbindung von Epoxid und Silicon lassen für die korrosionsschützende Formulierung keine Hitzestabilität zu.

Formulierungen aus glycidylhaltigen Trialkoxysilanen, Siliconharzen und Epoxiden werden in WO 97/19764 beschrieben. Die Anwendung ist auf hitzeabweisende Beschichtungen gerichtet. Als Hauptbindemittel dient ein Silicon modifizierter Polyether. Durch die thermolabilen Polyether-Substituenten können diese Formulierungen nicht für den hitzestabilen Korrosionsschutz eingesetzt werden.

Die Modifizierung von Epoxidharzen mit Siliconen wird im japanischen Patent JP 52040535 A beschrieben. Die Umsetzung von methoxy- oder hydroxyfunktionellen Siloxanen mit Epoxidharzen und organischen Säuren oder Anhydriden wird hier beschrieben. Als Härter dient ein Umsetzungsprodukt aus Phenylglycidylether, Dicyanamid und Benzyltriammoniumchlorid. Durch Verwendung dieses nicht hitzestabilen Härters können die erhaltenen Beschichtungen nicht bei erhöhten Temperaturen eingesetzt werden.

In JP 50153063 A wird die Modifizierung von Epoxidharz mit einem Methyl-Phenyl-Siliconharz beschrieben. Das transparente Silicon-Epoxidharz wird in einem zweiten Schritt mit Phthalsäureanhydrid umgesetzt. Die bei der Reaktion mit Phthalsäureanhydrid entstehenden Carbonsäuregruppierungen haben dabei einen negativen Einfluss auf die Lagerstabilität des Silicon-Epoxidharzes. Insbesondere die hydrolyselabilen Si-OR-Bindungen sind bei Gegenwart von aciden Gruppierungen, wie beispielsweise Carbonsäuren (-COOH), nicht lagerstabil.

DT 11 29 704 und DT 954 456 beschreiben die Umsetzung von Epoxiden mit Silanen oder mit Silanmischungen. Nachteil dieses Verfahrens ist die unreproduzierbar verlaufende Reaktion der trialkoxyfunktionellen Silane. Je nach Reaktionsführung kommt es zu der Bildung von unlöslichen Silicon-Gelen. Entsprechend können nur geringe Mengen dreifachfunktioneller Silane (T-Einheiten) eingesetzt werden; der Hauptanteil des Silicones wird aus difunktionellen Einheiten (D-Einheiten) gebildet. Dies führt zwar zu flexiblen, aber nicht ausreichend harten Beschichtungen.

Aufgabe der vorliegenden Erfindung ist die Bereitstellung eines hitzestabilen Siliconenthaltenden Epoxidharzes, das auch bei relativ niedrigen Temperaturen unterhalb 200 °C ohne die Verwendung von Härtern thermisch härtbar ist, und dessen Beschichtungen auch nach Dauertemperaturbelastung bei hohen Temperaturen oberhalb 200 °C korrosionsschützend wirken.

Die vorliegende Erfindung stellt ein Verfahren für die Herstellung von siliconhaltigen Epoxidharzen und deren Verwendung für korrosionsschützende, temperaturstabile Beschichtung bereit.

Die vorliegende Erfindung betrifft ein Verfahren zur Herstellung von Siliconharzen, das dadurch gekennzeichnet ist, dass man
I) Siloxane der allgemeinen Formel

   RₐSi(OR')_{b}O_{(4 - a - b)/2}

   worin
   OR' für eine Alkoxygruppe mit primären oder sekundären aliphatischen Alkoholen mit 1 bis 8 C-Atomen,
   R gleich oder verschieden für eine Alkylgruppe mit 1 bis 8 C-Atomen oder eine aromatische Gruppierung mit 6 bis 20 C-Atomen steht,
   a für einen Wert von 0,1 bis 2,0 und
   b für einen Wert von 0,1 bis 1,0
   steht,
   mit
II) einem oder mehreren niedermolekularen mehrwertigen Alkohol/Polyol und
III) einem oder mehreren Epoxidgruppen-haltigen Harz, mit wenigstens zwei 1,2-Epoxidgruppen pro Molekül,
bei Temperaturen im Bereich von 100 bis 160 °C unter Entfernung des Alkohols HOR' bis zu einem Reaktionsumsatz von 20 bis 80 % umsetzt und durch Abkühlen auf eine Temperatur < 100 °C die Umsetzung abbricht.

Ein ausreichender Reaktionsumsatz lässt sich beispielsweise dadurch ermitteln, dass man aus der Reaktionsmischung einen Teil entnimmt, diesen auf einer Glasplatte trocknet und die Transparenz der Beschichtung der Glasplatte bestimmt. Ein transparenter Film zeigt einen ausreichenden Reaktionsumsatz an. Aus der abdestillierten Ethanolmenge kann man darüber hinaus den Reaktionsumsatz genau bestimmen.

Ebenfalls beschreibt die vorliegende Erfindung eine damit hergestellte Beschichtung, bestehend aus dem erfindungsgemäßen Siliconharz, und deren Verwendung.

Überraschenderweise wurde gefunden, dass sich unter Verwendung von einem oder mehreren niedermolekularen mehrwertigen Alkohol/Polyol die Modifizierungsreaktion von Siliconharz und Epoxidharz einfacher und schneller durchführen lässt. Im Gegensatz zu der Reaktion ohne Alkohol/Polyol lassen sich erfindungsgemäß auch Epoxide mit mittleren Molekularmassen von ca. 1000 bis 5000 g/mol zu transparenten Bindemitteln umsetzen.

Als niedermolekulare Alkohole/Polyole können beispielsweise lineare oder verzweigte aliphatische Diole, Triole oder Tetrole eingesetzt werden oder auch niedermolekulare Polyesterpolyole. Geeignete Polyole sind beispielsweise Ethylenglycol, Polyethylenglykol, Trimethylolethan oder Trimethylolpropan. Geeignete Polyesterpolyole besitzen vorzugsweise eine Hydroxyfunktionalität von etwa 200 bis 600 mg/mol KOH/g Polymer (sogenannte OH-Zahl). Ein geeignetes Polyesterpolyol ist beispielsweise Bis(2,2-dihydroxymethyl)butylterephthalat.

Der organische Anteil der Siliconharze sollte vorzugsweise bei etwa 50 Gew.-% liegen. Hohe Anteile führen zu opaken, nichttransparenten Beschichtungen. Die Molekularmasse kann hier bis zu 1000 g/mol betragen.

Durch die Modifizierung mit Alkoholen/Polyolen bleiben nach der Reaktion mit den Siloxanen nicht-reagierte Hydroxygruppen (C-OH) erhalten, die bei der Einbrennreaktion für die Vernetzung unter Bildung einer Si-OC-Bindung geeignet sind. Entsprechend ist bei der Formulierung keine Zugabe eines zusätzlichen, in der Regel thermolabilen Vernetzers nötig.

Im Vergleich zu einem Umsetzungsprodukt ohne Alkohole/Polyole können die erfindungsgemäßen Bindemittel überraschenderweise auch bei Temperaturen unterhalb 200 °C eingebrannt werden.

Geeigneterweise wird der niedrigmolekulare mehrwertige Alkylalkohol bzw. deren Mischungen von verschiedenen Alkoholen in Konzentrationen von 1 bis 20 Gew.-%, bevorzugt 2 bis 15 Gew.-% bezogen auf den Gesamtfestkörper des resultierenden siliconmodifizierten Epoxid-Bindemittels eingesetzt. Die geeigneten Polyesterpolyole können in Konzentrationen von 5 bis 80 Gew.-%, bezogen auf die Alkohol/Polyolkomponente eingesetzt werden.

RₐSi(OR')_{b}O_{(4 - a - b)/2} ist ein Polysiloxanharz mit 0.1 < a < 2.0, 0.1 < b < 1.0 und a+b<4, wobei R gleich oder verschieden für eine Alkylgruppe bestehend aus 1 bis 8 Kohlenstoffatomen oder eine aromatische Gruppierung mit 6 bis 20 Kohlenstoffatomen steht. Beispiele für Alkylgruppen sind unter anderem Methyl, Ethyl, Isopropyl, n-Butyl und t-Butyl. Ein Beispiel für eine aromatische Gruppierung ist Phenyl. Im Falle der Anwesenheit mehrerer Reste R kann daher R gleich oder verschieden sein. Besonders bevorzugte Substituenten R sind Methyl oder Phenyl oder Mischungen aus Methyl und Phenyl. R' der Alkoxygruppe steht für einen Alkylrest bestehend aus 1 bis 8 Kohlenstoffatomen wie zum Beispiel Methyl oder Ethyl.

Die Herstellung von Siliconharzen an sich ist seit langem in der Literatur bekannt (siehe W. Noll in "Chemie und Technologie der Silicone", Verlag Chemie, Weinheim (1968)) und wird beispielsweise in DE 34 12 648 C beschrieben.

Als Epoxidharze können handelsübliche, vorzugsweise nicht siliconhaltige Bindemittel mit wenigstens zwei 1,2-Epoxidgruppen pro Molekül eingesetzt werden. Beispiele für geeignete niedermolekulare Epoxidharze (MW < 5000 g/mol) sind handelsübliche aliphatische Epoxide (Eponex® 1513, Epodil® 757 oder Epilox® M700) oder aromatische Epoxide (Epikote® 1001, Epikote® 1007, Epon® 828). Diese werden im Gegensatz zu hochmolekularen Epoxidharzen für die Modifizierungsreaktion verwendet, zum Beispiel mit mittleren Molekularmassen über 8000 g/mol. Aufgrund der zu großen Unverträglichkeit lassen sich keine transparenten Bindemittel herstellen.

Besonders bevorzugt im Sinne der vorliegenden Erfindung werden die Siliconharze dadurch hergestellt, dass man Stoffmengenverhältnisse von COH- zu SiOR'-Gruppen gleich oder größer 1 einstellt. Wird das Verhältnis kleiner 1 eingestellt und somit ein Überschuss an SiOH-Gruppen erhalten, so bilden sich nicht lagerstabile Siliconharze.

Zur Herstellung von hitzestabilen Beschichtungen auch bei Temperaturen über 200 °C Dauerbelastung sind meist Silicongehalte von über 30 Gew.-% bezogen auf den Gesamt-Bindemittelfestkörper notwendig. Bei Silicongehalten über 90 Gew.-% wird aufgrund der erhöhten Wasserdampfdurchlässigkeit die Korrosionsschutzwirkung verschlechtert.

Die Komponenten werden üblicherweise in solchen Mengenverhältnissen miteinander umgesetzt, dass eine SiOR'-Gruppe etwa eine COH-Gruppe entspricht oder das Verhältnis der COH-Gruppen zu SiOR'-Gruppen größer 1 ist. Deutliche Überschüsse an SiOR' erniedrigen die Lagerstabilität, die mindestnötige Aushärttemperatur wird erhöht.

Geeignete Umesterungskatalysatoren sind beispielsweise Metallkatalysatoren auf Basis von zum Beispiel Magnesium, Kobalt, Eisen, Aluminium, Titan, Blei, Zink oder Zinn, beispielsweise in Form ihrer Laurate, Octoate, Acetate, Acetylacetonate, Neodecanate oder Naphthalate. So können Titanester oder Cobaltsalze organischer Säuren oder Sulfonsäuren, wie p-Toluolsulfonsäure oder Benzolsulfonsäure eingesetzt werden. Besonders geeignete Organozinnkatalysatoren sind beispielsweise Dibutylzinndilaurat, Dibutylzinndioctoat oder Dibutylzinndiacetat. Besonders geeignete Organotitankatalystatoren sind beispielsweise Tetra(n-butyl)titanat oder Tetra(iso-propyl)titanat.

Üblicherweise wird die Modifizierungsreaktion in einem oder mehreren Lösemitteln (Lösungsmittelgemisch) durchgeführt. Beispiele für geeignete aromatische Lösemittel sind Toluol oder Xylol; Beispiele für geeignete aliphatische Lösemittel sind Ester wie Methoxypropylacetat oder Ketone wie Cyclohexanon.

Zur Stabilisierung des Silicon modifizierten Epoxidharzes können am Ende der Reaktion niedrigmolekulare aliphatische einwertige Alkohole mit 1 bis 20 Kohlenstoffatomen zugegeben werden, wie beispielsweise iso-Butanol. Alternativ kann zur Stabilisierung auch Wasser zugegeben werden.

### Ausführungsbeispiele:

Bezugsbeispiel: (Herstellung des Siliconharzes)

Das Alkoxypolysiloxan der Formel (C₆H₅)_{0,5}(CH₃)_{0,5}-Si(OC₂H₅)_{0,8}O_{1,1} wurde gemäß DE 34 12 648 C aus Phenyltrichlorsilan, Methylethoxypolysiloxan, Ethanol und Wasser hergestellt. Das Siliconharz hatte einen Ethoxygehalt von 27,0 Gew.-%.

### Beispiel 1:

259 g des Epoxidharzes Epikote® 1001, 609 g des Epoxidharzes Epikote® 1007, 63 g Trimethylolpropan mit 880 g des Siliconharzes aus dem Bezugsbeispiel wurden mit 1484 g 1-Methoxy-2-propylacetat und 2 g Tetra(n-butyl)titanat bei 135 °C bis zu einem Reaktionsumsatz umgesetzt, bei dem das auf einer Glasplatte getrocknete Trennharz eine klare, transparente Beschichtung ergab. Die abdestillierte Ethanolmenge entsprach einem Reaktionsumsatz von etwa 60 %.

### Vergleichsbeispiel 1:

259 g des Epoxidharzes Epikote® 1001 und 609 g des Epoxidharzes Epikote® 1007 mit 880 g des Siliconharzes aus dem Bezugsbeispiel wurden mit 1484 g 1-Methoxy-2-propylacetat und 2 g Tetra(n-butyl)titanat bei 135 °C umgesetzt. Auch bei hohen Reaktionsumsätzen zeigte das auf einer Glasplatte getrocknete Silicon modifizierte Epoxidharz noch deutliche Trübungen der Beschichtung. Die abdestillierte Ethanolmenge entsprach einem Reaktionsumsatz von etwa 60 %.

### Vergleichsbeispiel 2:

Der Stand der Technik wurde weiterhin durch Prüfung einer Mischung aus Methyl-Phenyl-Siliconharz (21 Gew.-Teile P850) und einem Epoxidharz (6 Gew.-Teile Epikote® 828) nach dem japanischen Patent JP 61258871 A2 getestet.

### Beispiel 2:

Die Korrosionsschutz-Beschichtungen wurden durch Vermischen der Komponenten durch Dispergieren in einem Skandex für eine Stunde entsprechend Tabelle 1 hergestellt.

**Tabelle 1:**

| Formulierung der Korrosionsschutz-Beschichtungen (in Gewichtsanteilen) | | | |
|---|---|---|---|
| | Beschichtung 1* | Beschichtung 2 | Beschichtung 3 |
| Silicon-Epoxidharz nach Beispiel 1 | 42,1 g | | |
| Silicon-Epoxidharz nach Vergl.-Beispiel 1 | | 42,1 g | |
| Mischung aus Silicon- und Epoxidharz nach Vergl.-Beispiel 2 | | | 22,1 g |
| Echtschwarz 100 | 10,4 g | 10,4 g | 10,4 g |
| Plasturit® 0000 | 10,2 g | 10,2 g | 10,2 g |
| Heucophos® ZPO | 5,0 g | 5,0 g | 5,0 g |
| Talkum AT extra | 4,0 g | 4,0 g | 4,0 g |
| Solvesso® 150 | 13,0 g | 13,0 g | 13,0 g |
| Bentone SD 2 | 0,2 g | 0,2 g | 0,2 g |
| Methoxypropylacetat | 4,5 g | 4,5 g | 24,5 g |
| Butylacetat | 4,6 g | 4,6 g | 4,6 g |
| Xylol | 6,0 g | 6,0 g | 6,0 g |

| | | | |
|---|---|---|---|
| * - erfindungsgemäß | | | |

Die Beschichtung wird durch Rakeln mit einer Trockenfilmstärke von ca. 15 bis 25 µm auf ein Stahlblech Q-Panel R 46 aufgetragen und 20 Minuten bei 200 °C eingebrannt. Es ergeben sich jeweils homogene Filme.

### Beispiel 3:

130 g des Epoxidharzes Epikote® 1001, 305 g des Epoxidharzes Epikote® 1007 und 420 g Bis(2,2-dihydroxymethyl)butylterephthalat mit 880 g des Siliconharzes aus dem Bezugsbeispiel wurden mit 1484 g 1-Methoxy-2-propylacetat und 2 g Tetra(nbutyl)titanat bei 135 °C bis zu einem Reaktionsumsatz umgesetzt, bei dem das auf einer Glasplatte getrocknete Trennharz eine klare, transparente Beschichtung ergab. Die abdestillierte Ethanolmenge entsprach einem Reaktionsumsatz von etwa 60 %.

### Vergleichsbeispiel 3:

Als nichterfindungsgemäßer Siliconpolyester wurde das Reaktionsprodukt aus Bis(2,2-dihydroxymethyl)butylterephthalat und Siliconharz aus Beispiel 1 nach Beispiel D der DE 34 12 648 C hergestellt.

Die Harze nach Beispiel 3 und Vergleichsbeispiel 3 wurden durch Rakeln mit einer Trockenfilmstärke von etwa 15 bis 25 µm auf ein Stahlblech Q-Panel R 46 aufgetragen und 20 Minuten bei 200 °C eingebrannt. Es ergaben sich jeweils homogene Filme.

Die Ergebnisse sind in Tabelle 2 aufgeführt:

**Tabelle 2:**

| | Beschichtung Beispiel 3 | Beschichtung Vergl.-Beispiel 3 |
|---|---|---|
| Lagerstabilität Flüssiglack (4 Wochen bei 40 °C) | i.O. | i.O. |
| Korrosionsschutzwirkung (nach Einbrennen) | 0 | 2 |
| Korrosionsschutzwirkung (nach Einbrennen und T-Belastung 24 h 400 °C) | 0 | 2 |
| Kochwasserbeständigkeit | 0 | 1 |
| Bleistifthärte bei Raumtemperatur: | 3 H | 3 H |
| bei 200 °C: | 2 H | 2 H |
| Glanz bei 85 ° (vor/nach T-Belast. 200 °C) | 85/80 | 86/82 |
| Temperaturbeständigkeit bei 400 °C, 48 Stunden | 0 | 0-1 |
| Haftung zum Untergrund | Excellent | gut |

### Testmethoden:

### Korrosionsschutz-Wirkung:

Die Korrosionsschutzwirkung wird durch einen Salzsprühtest nach DIN 53167 (für Anstriche; Beschichtungen, Lackierungen) von einem mit der Beschichtung beschichtetem Stahlblech (Q-Panel R 46) bestimmt. Dabei werden die Beschichtungen bis zum Metalluntergrund angeritzt und der Grad der Unterwanderung nach Salzsprühtest beurteilt.

Der gleiche Test wird nach 48-stündiger Temperaturbelastung der Probe bei 400 °C durchgeführt.
- 0:: keine Korrosions-Unterwanderung nach Salzsprühtest,
- 1:: maximal 2 mm Korrosions-Unterwanderung nach Salzsprühtest,
- 2:: 2 - 5 mm Korrosions-Unterwanderung nach Salzsprühtest
- 3:: mehr als 5 mm Korrosions-Unterwanderung nach Salzsprühtest.

### Kochwassertest:

Ein mit der Korrosionsschutzbeschichtung (15-20 µm) beschichtetes Aluminiumblech wurde für 8 Stunden in einen mit kochendem Wasser gefüllten Behälter getaucht. Die Beschichtung wurde nach Entnahme aus dem kochenden Wasser auf Haftung und Blasenbildung überprüft. Die Haftungsprüfung erfolgte durch Gitterschnitt nach DIN ISO 2409.

Die Bewertung erfolgte nach den folgenden Noten:
- 0:: Kein Einfluss nach Belastung,
- 1:: leichte Blasenbildung und/oder leichter Haftungsverlust,
- 2:: deutliche Blasenbildung und/oder starker Haftungsverlust.

### Temperaturbeständigkeit:

Die Temperaturbeständigkeit wurde durch Lagerung bei 220 °C über einen Zeitraum von 16 Stunden bestimmt: Überprüft wurde Haftung und Glanzerhaltung. Die Haftungsprüfung erfolgte durch Gitterschnitt nach DIN ISO 2409. Die Bewertung erfolgte nach folgenden Noten:
- 0:: Kein Einfluss durch die Temperatur-Belastung,
- 1:: leichter Haftungsverlust nach Temperatur-Belastung,
- 2:: starker Haftungsverlust nach Temperatur-Belastung.

### Lagerstabilität:

Bei der Bestimmung der Lagerstabilität nach 4 Wochen bei 40 °C wurden Viskositäts-Stabilität, Trübungen, Separationserscheinungen und die Verarbeitbarkeit beurteilt.

### Haftung:

Die Haftungsprüfung erfolgte durch Gitterschnitt nach DIN ISO 2409.

### Bleistifthärte:

Die Bleistifthärte wurde nach ECCA-Norm T4-ISO 3270-ASTM D 3363 bestimmt.

Die Vorteile der erfindungsgemäßen Beschichtung wird aus den durchgeführten Tests (Tabelle 3) deutlich.

**Tabelle 3:**

| Eigenschaften der getesteten Korrosionsschutz-Beschichtungen: | | | |
|---|---|---|---|
| | Beschichtung 1* | Beschichtung 2 | Beschichtung 3 |
| Lagerstabilität Flüssiglack (4 Wochen bei 40°C) | i.O. | n.i.O. (Trübung) | i.O. |
| Korrosionsschutzwirkung (nach Einbrennen) | 0 | 0 | 0 |
| Korrosionsschutzwirkung (nach Einbrennen und T-Belastung 24 h 400°C) | 0 | 1 | 2 |
| Kochwasserbeständigkeit | 0 | 0 | 1 |
| Bleistifthärte bei Raumtemperatur: | 3H | 3H | 2H |
| bei 200°C: | 2H | H | F |
| Glanz bei 85° (vor / nach T-Belastung 200°C) | 12 / 10 | 10 / 8 | 11 / 2 |
| Temperaturbeständigkeit bei 400°C, 48 Stunden | 0 | 0-1 | 2 |
| Haftung zum Untergrund | i.O. | i.O. | i.O. |

| | | | |
|---|---|---|---|
| * - erfindungsgemäß (mit (n).i.O. = (nicht) in Ordnung, T = Temperatur) | | | |

Im Gegensatz zu den Beschichtungen 2 und 3 lassen sich die hervorragenden Korrosionsschutz-Eigenschaften bei der erfindungsgemäßen Beschichtung 1 auch schon bei einer Einbrenntemperatur von 180°C (20 Minuten) erreichen.

Die Beschichtung des erfindungsgemäßen Beispiels weist eine hervorragende Beständigkeit gegen Benzin, wie zum Beispiel handelsübliches Normal- oder Superbenzin, auf.

## Patentansprüche

1. Verfahren zur Herstellung von Silicon-Epoxidharzen, wobei man
I) Siloxanharze der allgemeinen Formel
RₐSi(OR')_{b}O_{(4 - a - b)/2}
worin
OR' für eine Alkoxygruppe mit primären oder sekundären aliphatischen Alkoholen mit 1 bis 8 C-Atomen,
R gleich oder verschieden für eine Alkylgruppe mit 1 bis 8 C-Atomen oder eine aromatische Gruppierung mit 6 bis 20 C-Atomen steht,
a für einen Wert zwischen 0,1 und 2,0 und
b für einen Wert zwischen 0,1 und 1,0 steht,
a + b < 4 ist,
mit
II) einem oder mehreren mehrwertigen Alkoholen und
III) einem oder mehreren epoxidgruppen-haltigen Harzen mit wenigstens zwei 1,2-Epoxidgruppen pro Molekül
bei Temperaturen im Bereich von 100 bis 160 °C unter Entfernung des Alkohols HOR' bis zu einem Reaktionsumsatz von 20 bis 80 % umsetzt und durch Abkühlen auf eine Temperatur < 100 °C die Reaktion abbricht, **dadurch gekennzeichnet, dass** man als mehrwertige Alkohole Ethylenglycol, Trimethylolpropan, Trimethylolethan und/oder Bis(2,2-dihydroxymethyl)butylterephthalat einsetzt.

2. Verfahren nach Anspruch 1, **dadurch gekennzeichnet, dass** man ein Siloxan einsetzt, wobei R für eine Methyl- und/oder Phenylgruppe steht.

3. Verfahren nach Anspruch 1 oder 2, **dadurch gekennzeichnet, dass** man die mehrwertigen Alkohole in einer Menge von 1 bis 20 Gew.-%, bezogen auf den Gesamtfestkörpergehalt des resultierenden Bindemittels einsetzt.

4. Verfahren nach einem der Ansprüche 1 bis 3, **dadurch gekennzeichnet, dass** man ein Epoxidharz einsetzt, das kein Silicon enthält.

5. Verfahren nach einem der Ansprüche 1 bis 4 zur Herstellung eines siliconhaltigen Harzes mit einem Siliconanteil von 30 bis 80 %, bezogen auf den Bindemittelgesamtfestkörper.

6. Mit einer Beschichtung aus einem Siliconharz nach einem der Ansprüche 1 bis 5 versehene Substrate.

7. Substrate nach Anspruch 6, **dadurch gekennzeichnet, dass** die Beschichtung wenigstens einen Zusatzstoff aus der Gruppe der Lösemittel, Füllstoffe, Pigmente, Cobindemittel, Haftvermittler oder Additive enthält.

## Claims

1. Process for preparing silicone epoxy resins which comprises reacting
I) siloxanes of the general formula
RₐSi(OR')_{b}O_{(4-a-b)/2}
in which
OR' is an alkoxy group with primary or secondary aliphatic alcohols having from 1 to 8 carbon atoms,
R is identical or different and is an alkyl group having from 1 to 8 carbon atoms or an aromatic group having from 6 to 20 carbon atoms,
a is between 0.1 and 2.0, and
b is between 0.1 and 1.0,
a + b < 4,
with
II) one or more polyhydric alcohols and
III) one or more resins containing epoxide groups, containing at least two 1,2-epoxide groups per molecule,
at temperatures in the range from 100 to 160°C with removal of the alcohol HOR' to a degree of conversion of from 20 to 80% and terminating the reaction by cooling to a temperature < 100°C **characterized in that** ethylene glycol, trimethylolpropane, trimethylolethane and/or bis(2,2-di-hydroxymethyl)butyl terephthalate is/are used as polyhydric alcohols

2. Process according to Claim 1, **characterized in that** a siloxane is used in which R is a methyl and/or phenyl group.

3. Process according to Claim 1 or 2, **characterized in that** the polyhydric alcohols are used in an amount of from 1 to 20% by weight, based on the overall solids content of the resultant binder.

4. Process according to any of Claims 1 to 3, **characterized in that** an epoxy resin containing no silicone is used.

5. Process according to any of Claims 1 to 4 for preparing a silicone resin having a silicone fraction of from 30 to 80%, based on the overall binder solids.

6. Substrate provided with a coating of a silicone resin as set forth in any of Claims 1 to 5.

7. Substrate according to Claim 6, **characterized in that** the coating comprises at least one additional substance from the group consisting of solvents, fillers, pigments, cobinders, adhesion promoters and additives.

## Revendications

1. Procédé pour la préparation de résines de silicone-époxyde, où on transforme
I) des résines de silicone de formule générale
RₐSi(OR')_{b}O_{(4-a-b)/2}
dans laquelle
OR' représente un groupement alcoxy présentant des alcools aliphatiques primaires ou secondaires comprenant 1 à 8 atomes de carbone,
R, identique ou différent, représente un groupement alkyle comprenant 1 à 8 atomes de carbone ou un groupement aromatique comprenant 6 à 20 atomes de carbone,
a représente une valeur entre 0,1 et 2,0 et
b représente une valeur entre 0,1 et 1,0,
a+b < 4,
avec
II) un ou plusieurs alcools polyvalents et
III) une ou plusieurs résines contenant des groupements époxyde, comprenant au moins deux groupements 1,2-époxyde par molécule
à des températures dans la plage de 100 à 160°C avec élimination de l'alcool HOR' jusqu'à une transformation de la réaction de 20 à 80% et on interrompt la réaction par refroidissement à une température <100°C, **caractérisé en ce qu'**on utilise comme alcools polyvalents l'éthylèneglycol, le triméthylolpropane, le triméthyloléthane et/ou le téréphtalate de bis(2,2-dihydroxyméthyl)butyle.

2. Procédé selon la revendication 1, **caractérisé en ce qu'**on utilise un siloxane dans lequel R représente un groupement méthyle et/ou phényle.

3. Procédé selon la revendication 1 ou 2, **caractérisé en ce qu'**on utilise les alcools polyvalents en une quantité de 1 à 20% en poids, par rapport à la teneur totale en corps solides du liant obtenu.

4. Procédé selon l'une quelconque des revendications 1 à 3, **caractérisé en ce qu'**on utilise une résine époxyde qui ne contient pas de silicone.

5. Procédé selon l'une quelconque des revendications 1 à 4 pour la préparation d'une résine contenant du silicone, présentant une proportion de silicone de 30 à 80 %, par rapport à la totalité des corps solides du liant.

6. Substrats pourvus d'un revêtement en une résine de silicone selon l'une quelconque des revendications 1 à 5.

7. Substrats selon la revendication 6, **caractérisés en ce que** le revêtement contient au moins un adjuvant du groupe des solvants, charges, pigments, co-liants, promoteurs d'adhérence ou additifs.
